# EUROPEAN PATENT APPLICATION

(11) **EP 4 170 218 A1**
(43) Date of publication of application: **26.04.2023**
(21) Application number: 22203133.8
(22) Date of filing: 21.10.2022
(51) Int. Cl.: F16L 37/56, F16L 39/00

(54) **PIPE INTERCONNECTOR**

(30) Priority: 21.10.2021 GB 202115153
(71) Applicant: Fenson, Mark Vince, Cotesbach, Leicestershire LE17 4HZ (GB)
(72) Inventor: FENSON, Vince, Cotesbach, LE17 4HZ (GB); REANEY, Matthew, Sheffield, S9 1TS (GB); BEEVER, Andrew, Sheffield, S9 1TS (GB)
(74) Representative: Sugden, Mark William

(57) **Abstract**

A pipe interconnector (1) comprises a male part (2) which has two pipe receiving portions (10, 11), and a female part (3) which has two pipe receiving portions (12, 13). The male and female parts (2, 3) are engageable with and disengageable from each other. Engagement of the male and female parts (2, 3) forms two passageways for fluid from the pipe receiving portions (10, 11) to the pipe receiving portions (12, 13).

## Description

### FIELD

The present invention relates to a pipe interconnector, and more particularly to a pipe interconnector for use in modular construction.

### BACKGROUND

In modular construction, individual units or modules are assembled off-site before being brought to the building site where they are assembled together to form the building. Since assembly of the modules takes place off-site, for example in a factory production line, increases in efficiency can be obtained in comparison to traditional construction where more of the construction takes place at the building site. In both traditional and modular construction, an on-site plumber will need to connect sections of pipework together to connect up the plumbing system.

The present invention aims to mitigate at least some of the problems associated with connecting pipework.

### SUMMARY

A first aspect of the present invention provides a pipe interconnector comprising a first part and a second part, the two parts being engageable with and disengageable from each other, the two parts each having at least two pipe receiving portions, wherein the first part is engageable with the second part so as to provide a first passageway for fluid from a pipe receiving portion of the first part to a pipe receiving portion of the second part, and a second passageway for fluid from another pipe receiving portion of the first part to another pipe receiving portion of the second part.

The first aspect of the present invention provides the following advantages. Previously, when connecting hot and cold water pipes, an on-site plumber would attach a fitting to an end of a hot water pipe, and then attach that fitting to an end of another hot water pipe, to join the pipes. The plumber would then do the same for the cold water pipes. In the present invention, some pipes can be attached to the pipe interconnector off-site, so that the on-site plumber just needs to attach the other pipes to the pipe interconnector, and then to engage the two parts of the pipe interconnector. Hence fewer steps are required by the on-site plumber. The more pipes are attached to the pipe interconnector, the greater the time saving.

Preferably, the first part comprises a tubular protrusion having an open end, and the second part comprises a recess for receiving the tubular protrusion, and the first part is engageable with the second part by the tubular protrusion being received in the recess to form the first passageway. In this case, the first part may be considered the male part, and the second part the female part.

The first part may comprise another tubular protrusion having an open end, and the second part may comprise another recess for receiving the other tubular protrusion, and the first part may be engageable with the second part by the other tubular protrusion being received in the other recess to form the second passageway. The preferable features outlined below of the tubular protrusion and recess are equally applicable to the other tubular protrusion and the other recess.

Preferably, the tubular protrusion is slidably received in the recess.

Preferably, the tubular protrusion is held in the recess by an interference fit.

Preferably, when the tubular protrusion is received in the recess, an O-ring is positioned to seal the space between the periphery of the tubular protrusion and the wall of the recess. The O-ring may be positioned in a groove in the periphery of the tubular protrusion or the wall of the recess.

Preferably, another O-ring is provided to seal the space between the periphery of the other tubular protrusion and the wall of the other recess in a corresponding way to the first O-ring.

Preferably, the first part comprises a first part main body, and the second part comprises a second part main body, and the tubular protrusion of the first part is formed with one of the pipe receiving portions as one piece which is separate from the first part main body, and the recess of the second part is formed with another of the pipe receiving portions as one piece which is separate from the second part main body. Therefore, the first passageway extends from the pipe receiving portion of the first part to the pipe receiving portion of the second part, and the first part main body and the second part main body do not form the first passageway. This means that the fluid flowing in the first passageway does not come into contact with the first and second part main bodies. This means that the first and second part main bodies do not need to be formed of a material which is suitable for carrying and coming into contact with the fluid. For example, if the fluid is water for drinking, there is a wider choice of materials for the first and second part main bodies, rather than just materials which are approved to transport drinking water. Further, the main bodies do not have to be pressure tested or handle the pressures of the fluid.

The tubular protrusion of the first part formed with one of the pipe receiving portions as one piece may be removable from the first part main body. The recess of the second part formed with another of the pipe receiving portions as one piece may be removable from the second part main body.

The tubular protrusion of the first part formed with one of the pipe receiving portions as one piece may be a pipe coupling first part. The recess of the second part formed with another of the pipe receiving portions as one piece may be a pipe coupling second part. The pipe coupling first part and the pipe coupling second part may together form a pipe coupling.

The pipe coupling first part may be received in a hole in the first part main body, and the first part main body may be provided with a seat to prevent the pipe coupling first part from moving away from the pipe coupling second part when the first and second parts are engaged. This prevents the pipe coupling from coming apart and fluid from leaking from the first passageway. The second part main body may be provided with a corresponding seat for the pipe coupling second part.

Preferably, each pipe receiving portion comprises a tubular pipe insert which forms the first or second passageway and is configured to be inserted into the end of a pipe. The tubular protrusion of the first part may be formed with one of the tubular pipe inserts as one piece which is separate from the first part main body, and the recess of the second part may be formed with another of the tubular pipe inserts as one piece which is separate from the second part main body.

Each tubular insert may have at least one O-ring on its outer surface to seal the space between the pipe and the tubular insert.

Preferably, each pipe receiving portion comprises a tubular sleeve which is configured to receive the end of a pipe. The tubular sleeve may be configured to be press-fitted or crimped onto the pipe when the pipe is inserted into the sleeve, to hold the pipe in place.

In one embodiment, the first part and second part each has an engaging or mating surface which are engageable with each other, the engaging or mating surfaces being configured to allow the first part to engage with the second part so as to provide the first passageway for fluid from the pipe receiving portion of the first part to the pipe receiving portion of the second part, but to prevent the first part engaging with the second part so as to provide a passageway for fluid from the pipe receiving portion of the first part to the other pipe receiving portion of the second part. This prevents the parts being assembled with the wrong orientation.

In one embodiment, the first part comprises a protrusion, and the second part comprises a recess for receiving the protrusion when the first part engages with the second part, the protrusion and recess being configured to allow the first part to engage with the second part so as to provide the first passageway for fluid from the pipe receiving portion of the first part to the pipe receiving portion of the second part, but to prevent the first part engaging with the second part so as to provide a passageway for fluid from the pipe receiving portion of the first part to the other pipe receiving portion of the second part. The protrusion and recess prevent the parts being assembled with the wrong orientation.

The protrusion being received in the recess may form the first or second passageway. More than one protrusion and more than one recess may be provided, and one protrusion may be receivable in one recess but not another recess. This prevents the parts being assembled with wrong orientation.

Preferably, the protrusion is slidably received in the recess.

Preferably, the protrusion is a guiding protrusion, and the recess is a channel. The guiding protrusion and channel prevent the parts being assembled with the wrong orientation.

Preferably, the guiding protrusion is slidably received in the channel.

It is preferable that the guiding protrusion, when present, has a shape with no rotational symmetry when viewed along the direction in which the first and second parts are engageable, and the channel has a corresponding shape in cross-section. For example, the guiding protrusion has T-shaped cross-section, and channel has a corresponding T- shaped cross-section. Alternatively, the guiding protrusion and channel could have a cross-sectional shape of an isosceles (not equilateral) triangle.

In one preferred form, the channel has an open end so the guiding protrusion can be pushed out of the channel by the user. This makes it easier to disengage the parts.

In one embodiment, the first and second parts are formed so that the first part can be disengaged from the second part, rotated about the direction in which the first and second parts are engageable and then engaged with the second part so as to swap the way the pipe receiving portions are connected to each other. In this way, if the pipe receiving portions of, for example, the first part have been connected to fluid supplies the wrong way round, the first part can simply be rotated 180 degrees to swap the supplies. This avoids having to change the connections elsewhere such as at the pipe receiving portions or elsewhere on the pipe network.

Preferably, a locking mechanism is provided to lock the first and second parts together in engagement. The locking mechanism prevents or at least acts against the parts moving apart by the action of a person or by build-up of fluid pressure.

Preferably, the locking mechanism is operable by hand to lock the first and second parts together in engagement. Hence locking the locking mechanism does not require additional tooling and is quick and easy to use.

Preferably, the locking mechanism is operable by hand to unlock the first and second parts so that they can be disengaged. Hence unlocking the locking mechanism does not require additional tooling and is quick and easy to use.

Preferably, the locking mechanism is provided with a handle by which it is operable to lock and/or unlock the first and second parts.

Preferably, operation of the locking mechanism to lock the first and second parts together in engagement pushes the two parts towards each other. Therefore, the two parts are compressed together. This ensures tight engagement and minimises the risk of the two parts coming apart and possible escape of fluid from the first and second passageways.

Preferably, the locking mechanism is provided by a locking member received in a hole in the first part and a hole in the second part, the holes being aligned when the first and second parts are engaged. Preferably, the locking mechanism is locked by a locking member being inserted into a hole in the first part and a hole in the second part, the holes being aligned when the first and second parts are engaged. This insertion may be all that is required to prevent the first and second parts moving apart, or another step by the user may be required. In one embodiment, the hole in the first part is formed in the guiding protrusion.

The locking member may have a handle.

In one embodiment, the holes extend at an angle, preferably at a right angle, to the direction in which the first and second parts are engageable.

Alternatively, the holes may extend substantially parallel to the direction in which the first and second parts are engageable. This allows the parts in which the holes are formed (for example, first and second part main bodies) to be identical to each other. This can simplify the manufacturing process. On the other hand, if the holes extend at an angle to the direction in which the first and second parts are engageable, one part in which a hole is formed may need to extend into the other part in which a hole is formed, which may mean non-identical parts are required.

Preferably, the locking member while received in the holes is movable between a first position in which it can be removed from the holes, and a second position in which it cannot be removed from the holes. In the second position, the first and second parts cannot be disengaged from each other. In some embodiments, in the first position, the first and second parts can be disengaged from each other, and hence this movement of the locking member is required to prevent the first and second parts moving apart. In other embodiments, in the first position, the first and second parts cannot be disengaged from each other. In these other embodiments, the locking member, when in the second position, is less likely to come out of the holes accidentally, and provides an additional safety feature.

Preferably, the locking member comprises a head arranged to bear against a surface of one of the first and second parts adjacent the respective hole in the second position, the head receivable on said surface in the first position when the parts are engaged. Preferably, said surface has an inclined surface or ramp up which the locking member travels when it moves from the first position to the second position, such that the first and second parts are compressed together.

The locking member is preferably rotatable between the first and second positions.

Preferably, moving the locking member from the first position to the second position compresses the two parts together. Compressing the two parts together minimises the risk of the two parts coming apart and possible escape of fluid from the first and second passageways.

Preferably, when the holes extend substantially parallel to the direction in which the first and second parts are engageable, the locking member has two bearing surfaces which, when the locking member is in the second position, bear against respective surfaces of the first and second parts facing in opposite directions, which are preferably outer surfaces which are outer in the direction in which the first and second parts are engageable, to prevent the first and second parts being disengaged.

When the locking member is in the first position, at least one of the bearing surfaces does not bear against an outer surface of the first and second parts to prevent the first and second parts being disengaged. Therefore, the first and second parts can be disengaged.

Preferably, at least one of the respective surfaces of the first and second parts facing in opposite directions has an inclined surface or ramp up which the locking member travels when it moves from the first position to the second position. This acts to push the first or second part which has the inclined surface towards the other of the first and second part to compress the two parts together.

Preferably, at least one of the respective surfaces of the first and second parts facing in opposite directions has a catch to restrict movement of the locking member from the second position to the first position. A larger initial force may be required to move the locking member past the catch in comparison to the force required to move the locking member after the locking member has passed the catch. The locking member may have a protrusion, and contact between the protrusion and the catch restricts the movement of the locking member. The catch may protrude from the surface on which it is provided. The catch may have an inclined surface so that the locking member moves away from the surface on which the catch is provided as the locking member moves from the first position to the second position. The catch may extend in an arc when viewed from above. Two or more catches may be provided on the same surface of the first or second part.

Preferably, at least one of the respective surfaces of the first and second parts facing in opposite directions has a stop to prevent movement of the locking member past the second position after the locking member has moved from the first position to the second position.

Preferably, when the locking member is in the second position in which it cannot be removed from the holes, a path for a screw, security pin or security tie, to prevent the locking member being moved to the first position, is formed through the locking member and the first and/or second part. For example, the path may be formed in a straight line. This means that the locking member cannot be moved to the first position without removing the screw, security pin or security tie. Preferably, the security tie is a tamper-evident security tie. In this way, it can be known by visual inspection if the tie has been removed and replaced again. Preferably, the path may be formed so that a screw may be passed through the locking member and the first and/or second part and into a structural member behind the pipe interconnector to fix the pipe interconnector to the structural member. In this way, the screw serves a dual purpose: to maintain the locking member in the second position, and to fix the interconnector to the structural member. It would not be possible to fix the interconnector to the structural member with the screw in this way if the locking member were in the first position. This therefore provides an additional safety feature.

In one preferred form, the locking member is a key or locking pin.

The key or locking pin may have a handle. The path for a security tie may be formed through the handle.

The handle may have an underside that can be pushed by the user when the locking pin is fully received in the holes to remove the pin from the holes.

Preferably, the locking pin can be rotated in the holes to a position in which the underside of the handle can no longer be pushed by the user.

Preferably, the locking pin can be rotated in the holes so that the handle is received in a slot in the first or second part so that the underside of the handle can no longer be pushed by the user.

In another preferred form, the locking member is a locking screw which can be screwed into the holes in the first and second parts.

Preferably, at least one pipe receiving portion is marked to distinguish it from the other pipe receiving portion of that part. For example, on each part, there is one red pipe receiving portion and one blue pipe receiving portion for hot and cold water, respectively.

It is preferable that the first and second parts are made at least in part from at least one selected from the group of brass, plastics, polybutylene, acetyl, glass-filled nylon, and sulphone.

It is preferable that the two parts are slidably engageable with and disengageable from each other.

The male part may comprise the guiding protrusion and the female part the channel.

Preferably, the first and second passageways are formed so that fluid in the first passageway cannot mix with fluid in the second passageway.

Preferably, at least one hole is formed in the first or second part by which the part can be fixed to a structural member.

A second aspect of the invention provides a housing, and at least two pipe interconnectors according to the first aspect, the housing comprising a first housing part and a second housing part, the two housing parts being engageable with and disengageable from each other, the first housing part containing the first parts of the pipe interconnectors, and the second housing part containing the second parts of the pipe interconnectors, the housing being configured so that engagement of the first and second housing parts causes engagement of the first and second parts of the pipe interconnectors.

### BRIEF DESCRIPTION OF THE DRAWINGS

Embodiments of the present invention will now be described, purely by way of example, with reference to the drawings in which:
Figure 1 is an isometric view of a pipe interconnector according to a first embodiment of the invention with the male and female parts disengaged;
Figure 2 is a cross-sectional view of the pipe interconnector of Figure 1;
Figure 3 is another cross-sectional view of the pipe interconnector of Figure 1;
Figure 4 is a cross-sectional view of the pipe interconnector of Figure 1 but with the male and female parts engaged;
Figure 5 is an isometric view of a pipe interconnector of Figure 1 but showing the locking pin before insertion;
Figure 6 is an isometric view of a pipe interconnector of Figure 1 but showing the locking pin after insertion but before rotation;
Figure 7 is an isometric view of a pipe interconnector of Figure 1 but showing the locking pin after insertion and rotation;
Figure 8 is an isometric view of a pipe interconnector according to a second embodiment of the invention;
Figure 9 is a plan view of the pipe interconnector of Figure 8;
Figure 10 is a front elevation view of the pipe interconnector of Figure 8 showing the key in a locked position;
Figure 11 is a cross-sectional view of the pipe interconnector of Figure 10 along the line A-A;
Figure 12 is an enlarged fragmentary view of detail B shown in Figure 11 ;
Figure 13 is front elevation view of the pipe interconnector of Figure 8 showing the key in an unlocked position;
Figure 14 is an exploded isometric view of the pipe interconnector of Figure 8 with the pipe couplings shown again separately on one side;
Figure 15 is an isometric view of the female part of the pipe interconnector of Figure 8 but without the key;
Figure 16 is an enlarged fragmentary view of detail A1 shown in Figure 15;
Figure 17 is an isometric view of the pipe interconnector of Figure 8 showing the key in a position between the locked position and the unlocked position; and
Figure 18 is an enlarged fragmentary view of detail B1 shown in Figure 17.

### DETAILED DESCRIPTION OF EMBODIMENT(S)

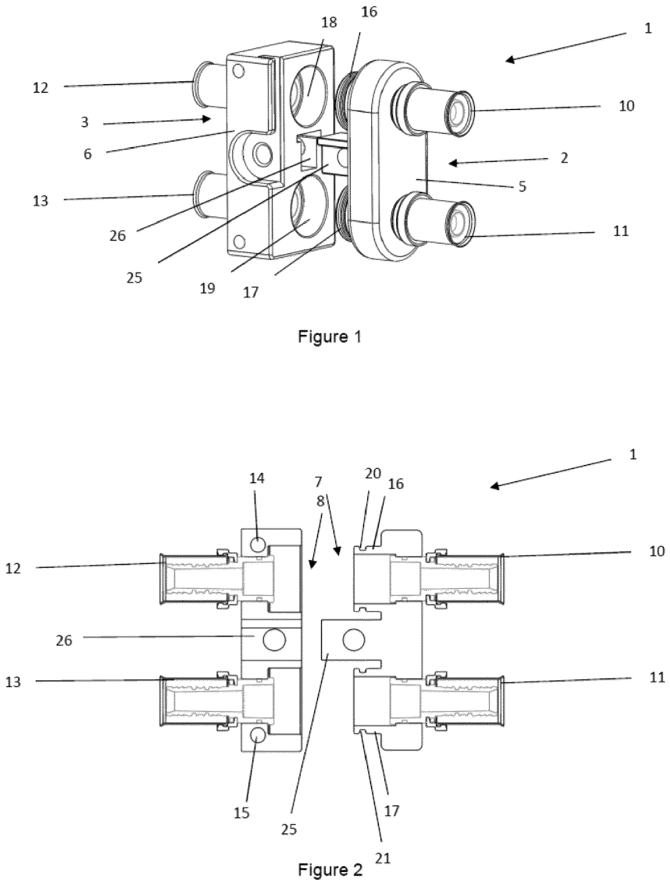

Referring to Figures 1 and 2, a pipe interconnector 1 according to the first embodiment of the invention comprises a first, male part 2 and a second, female part 3. The male and female parts 2, 3 are engageable with and disengageable from each other. In Figure 1, the male and female parts 2, 3 are shown disengaged from each other. The male part 2 has two pipe receiving portions 10, 11. The female part 3 also has two pipe receiving portions 12, 13. The male part 2 has a main body 5 having a generally rectangular shape curved at each end, and female part 3 has a main body 6 having a generally rectangular shape.

The male part 2 is engageable with female part 3 so as to provide a first passageway for fluid (water, in this embodiment) from a first pipe receiving portion 10 of the male part 2 to a first pipe receiving portion 12 of the female part 3, and a second passageway for fluid from a second pipe receiving portion 11 of the male part to a second pipe receiving portion 13 of the female part 3.

The male part 2 has a male part engaging surface 7 and the female part 3 has a female part engaging surface 8 which are engageable with and disengageable from each other.

In the illustrated embodiment, the pipe receiving portions 10-13 are provided by press fit fittings. Each of these fittings has been inserted into a hole in the main body 5 or 6 of the male part 2 or female part 3. As shown in Figure 2, each press fit fitting has a spigot that is received in the hole, and each spigot has an annular groove around its radially outer periphery. O-rings (not shown) are positioned in the grooves to seal the holes.

In use, the end of a pipe is inserted into, for example, pipe receiving portion 10, so that it is received in the annular space between the inner and outer tubular portions of the pipe receiving portion 10. (The inner tubular portion of the pipe receiving portion 10 may be referred to as a tubular pipe insert. The outer tubular portion of the pipe receiving portion 10 may be referred to as a tubular sleeve.) The pipe receiving portion 10 is then inserted into a crimping tool, which presses the outer tubular portion radially inwards and deforms it to seal around the end of the pipe. The outer tubular portion is made of metal so it can deform in this way. Other sealing methods for the pipe to the pipe receiving portions are possible, such as push fit, screw fit and the like, as well as other mechanical and/or chemical sealing methods.

In this embodiment, the main bodies 5, 6 of the male and female parts 2, 3 are made of polybutylene, but could be made instead of other plastic, or metal, for example, brass.

Referring to Figure 2, fixing holes 14, 15 are formed through the main body of the female part 3, into which screws can be inserted to fix the pipe interconnector 1 to a structural member, for example in a construction module. In the drawings of the first embodiment, sectioned parts are not shown with hatching, whereas in the drawings of the second embodiment they are.

The step of fitting the ends of the pipes to the pipe receiving portions 10-13 is usually carried out off-site, while the modules are being assembled in the factory, before the modules are brought to the construction site. The male part 2 may be included in a different module to the female part 3, each of the male and female parts 2, 3 being connected to pipes in the respective modules. When it comes to assembling the modules on site, the male and female parts 2, 3 can be engaged with each other, thereby connecting the pipes of one module to the pipes of the other.

The male part 2 comprises two tubular protrusions or spigots 16, 17 each having an open end. The spigots 16, 17 each protrude from the opposite side of the male part 2 from the pipe receiving portions 10, 11. The female part 3 comprises two recesses or sockets 18, 19 for receiving the respective spigots 16, 17. The male part 2 is engageable with the female part 3 by the spigots 16, 17 being slidably received in the sockets 18, 19 to form the first and second passageways.

Referring to Figure 2, the spigots 16, 17 each have an annular groove 20, 21 around its radially outer periphery in which an O-ring (not shown) is positioned. In an alternative embodiment (not shown) each part could comprise both a spigot and a socket.

As shown in Figure 1, the male part 2 comprises a protrusion in the present embodiment in the form of a protruding guiding protrusion 25. In this embodiment, the guiding protrusion has a T-shaped cross-section, but it can have a different shape. The female part 3 comprises a recess in the present embodiment in the form of a channel 26 for slidably receiving the guiding protrusion 25 when the male and female parts 2, 3 engage. The channel 26 has a corresponding shape to the guiding protrusion 25, and in this embodiment has a T-shaped cross-section, but can have a different shape. The guiding protrusion 25 and channel 26 prevent the male and female parts 2, 3 being engaged with the wrong orientation and thus prevent the pipe receiving portions being connected other than in the intended configuration. Alternatively, the channel could be provided on the part having the spigots, rather than receiving the spigots.

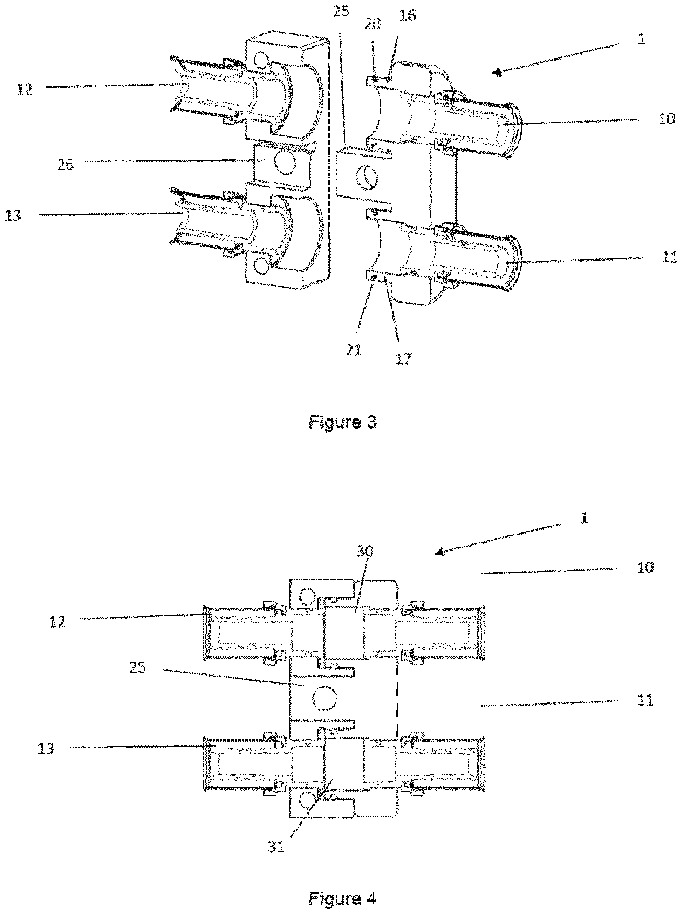

As shown in Figures 2 and 3, the channel 26 has an open end at the side opposite from the side on which the guiding protrusion 25 is inserted. The open end allows the user to push the guiding protrusion out of the channel, which helps to disengage the parts 2, 3.

Figure 4 shows the male and female parts 2, 3 engaged with each other. The first passageway 30 from pipe receiving portion 10 to pipe receiving portion 12, and the second passageway 31 from pipe receiving portion 11 to pipe receiving portion 13 are shown. The passageways are separated so that the fluid in the first passageway 30 cannot mix with fluid in the second passageway 31.

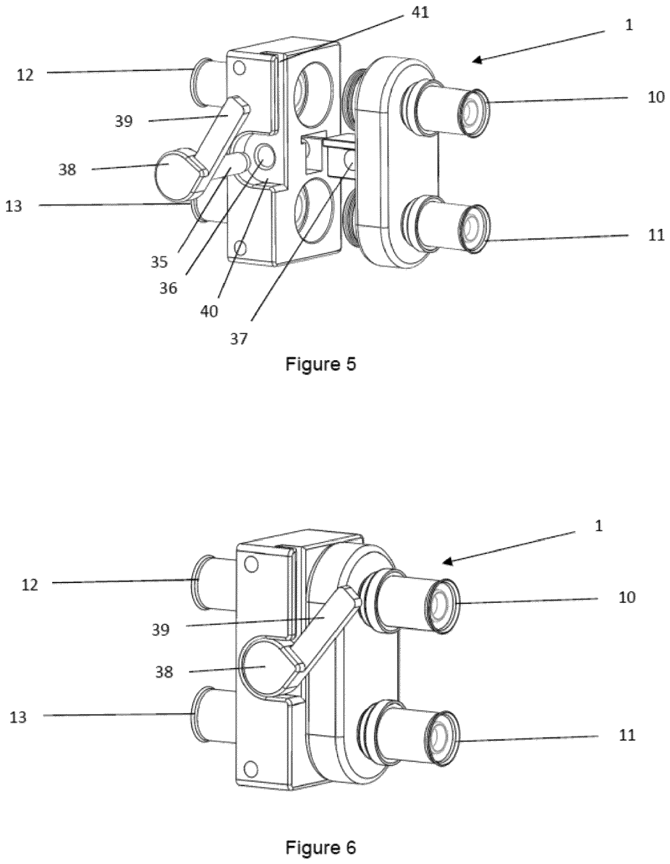

The locking mechanism will be described with reference to Figures 5-7. A hole 36 is formed in the female part 3. In the present embodiment the hole 36 is formed in two sections aligned on opposing sides of the channel 26. A hole 37 is formed in the male part 2, in the present embodiment specifically through the guiding protrusion 25. Both holes 36, 37 run at a right angle to the direction in which the parts 2, 3 engage. When the male and female parts 2, 3 are engaged, the hole 36 is aligned with the hole 37 and so can be considered to form a single hole. When the male and female parts 2, 3 are engaged, a locking member in the present embodiment in the form of a locking pin 35 is received in the holes 36, 37 which locks the parts 2, 3 in engagement. The guiding protrusion 25 cannot be removed from the channel 26 until the locking pin 35 has been removed from the holes 36, 37.

The locking pin 35 has a head 38, and handle 39 by which the head 38 and the locking pin 35 can be rotated in the holes 36, 37. Next to the hole 36 of the female part 3, a recess 40 is formed which receives the head 38 of the locking pin 35 when the pin 35 is inserted into the holes 26, 37. The side of the recess 40 has a partly curved surface corresponding to the partly curved surface of the head 38. These shapes allow the head 38 to rotate in the recess 40. The female part 3 has a groove 41 extending from the recess 40 in a plane normal to the direction in which the locking pin 35 extends.

The handle 39 has an underside (the side closest to the female part 3 in Figure 5) that can be pushed by the user when the pin 35 is fully received in the holes 36, 37 to remove the pin 35 from the holes 36, 37.

In this embodiment, the locking pin 35 can be rotated by the handle 39 until the handle 39 is fully received in the groove 41. This indicates visually to the user that the parts 2, 3 are locked in engagement, and also means the handle underside is not exposed so cannot be pushed by the user to remove the locking pin 35 from the holes 36, 37.

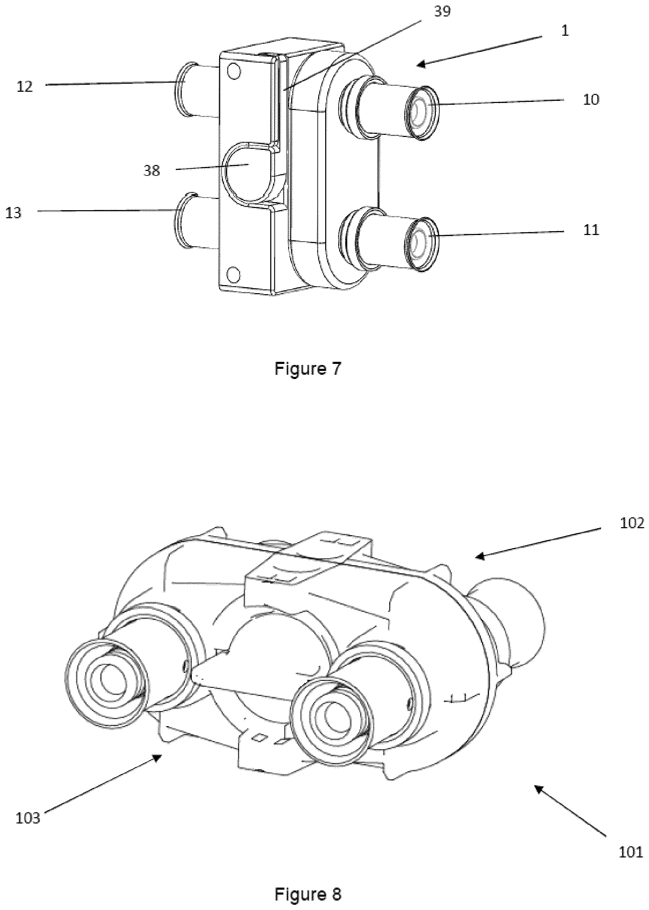

Referring to Figure 5, to lock the two parts 2, 3 in engagement, the user pushes the parts 2, 3 together until the guiding protrusion 25 is fully received in the channel 26 and the spigots 16, 17 are fully received in the sockets 18, 19. The locking pin 35 is then inserted into the holes 36, 37 until fully received as shown in Figure 6. Next the user pushes the handle 39 upwards in Figure 6 to rotate the locking pin 35 until the handle 39 is fully received in the groove 41. This is shown in Figure 7.

The locking member, in the present embodiment in the form of the locking pin 35, is movable between a first position in which it can be removed from the holes 36, 37 (as shown in Fig. 6), and a second position in which it cannot be removed from the holes 36, 37 (as shown in Fig. 7).

As shown in Figure 7, the head 38 is arranged to abut against a surface of the recess 40 adjacent the hole 36 when the locking pin 35 is in the second position. As shown in Figure 6, the head 38 is receivable on said surface of the recess 40 when the locking pin 35 is in the first position and when the parts 2, 3 are engaged.

It is preferred that pipe receiving portion 10 is marked red for hot water to distinguish it from pipe receiving portion 11 marked blue for cold water. Similarly, pipe receiving portion 12 is marked red for hot water to distinguish it from pipe receiving portion 13 marked blue for cold water.

In one embodiment, a housing is provided to house two or more pipe interconnectors. The housing comprises a first part and a second part which are engageable with and disengageable from each other. The first part of the housing contains the male parts of the pipe interconnectors, and the second part of the housing contains the second parts of the pipe interconnectors. The housing is configured so that engagement of the first and second parts of the housing causes engagement of the male and female parts of the pipe interconnectors. Each pipe interconnectors may be for a different service, such as clean water supply, waste water, or air supply or vent. The housing means that all the parts of the interconnectors can be engaged in one operation, rather than having to engage or unite the parts of each interconnector one by one. This also reduces the possibility of incorrect plumbing as between the hot and cold water supplies.

An embodiment of the invention has been described above, but variants are possible within the scope of the invention.

For example, in the embodiment described above, the main bodies 5, 6 of the male and female parts 2, 3 are made of polybutylene, but could be made instead of at least one selected from the group of brass, plastics, acetyl, glass-filled nylon, and sulphone.

When the main bodies 5, 6 are made of brass, a locking screw may be used as the locking mechanism, instead of the locking pin of the embodiment described above. The locking screw is screwed into the holes 36, 37 in the male and female parts 2, 3.

In the embodiment described above, the guiding protrusion prevents the male and female parts 2, 3 being engaged with the wrong orientation. However, the guiding protrusion is not essential and this could be achieved by having non-identical spigots 16, 17, for example of different sizes or shapes.

In the embodiment described above, the pipe interconnector is for water pipes, but could be used for other fluids.

A second embodiment of the invention will now be described. The second embodiment is similar to the first embodiment and only differences will be described.

Referring to Figure 8, a pipe interconnector 101 according to the second embodiment of the invention comprises a first, male part 102 and a second, female part 103. The male and female parts 102, 103 are engageable with and disengageable from each other. In Figure 8, the male and female parts 102, 103 are shown engaged with each other.

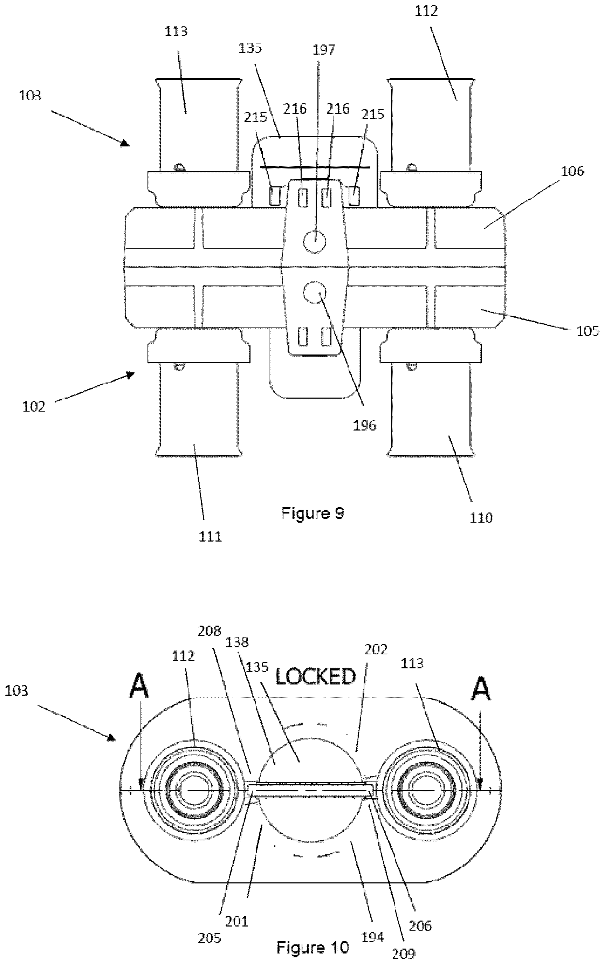

Referring to Figure 9, the male part 102 has two pipe receiving portions 110, 111. The female part 103 also has two pipe receiving portions 112, 113. The male part 102 and female part 103 each has a main body 105, 106 having a generally rectangular shape curved at each end.

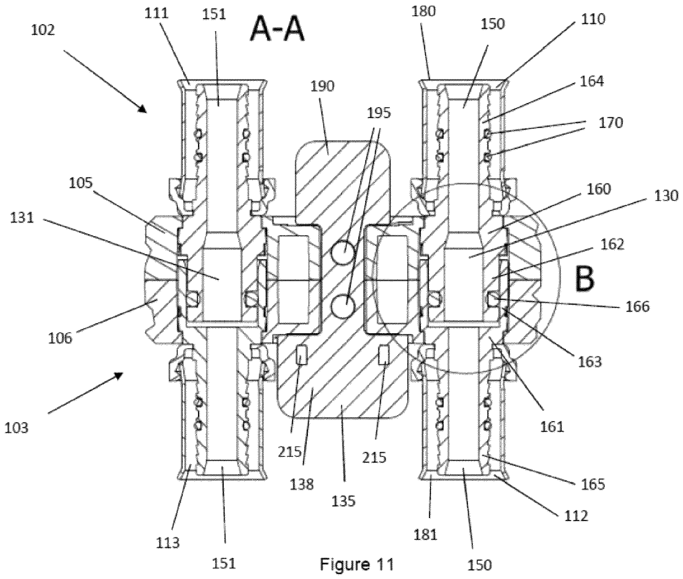

The second embodiment differs from the first embodiment in the way the first and second passageways are formed. Specifically, referring to Figure 11, in the second embodiment, pipe couplings 150, 151 are provided which couple the hot water pipes together and the cold water pipes together and form the first and second passageways 130, 131. The pipe couplings 150, 151 are separate and removable from the male part main body 105 and the female part main body 106.

The pipe couplings 150, 151 each have the same structure. Taking pipe coupling 150 as an example, the pipe coupling 150 is formed by a pipe coupling first part 160 and a pipe coupling second part 161. The pipe coupling first part 160 is part of the male part 102, and the pipe coupling second part 161 is part of the female part 103.

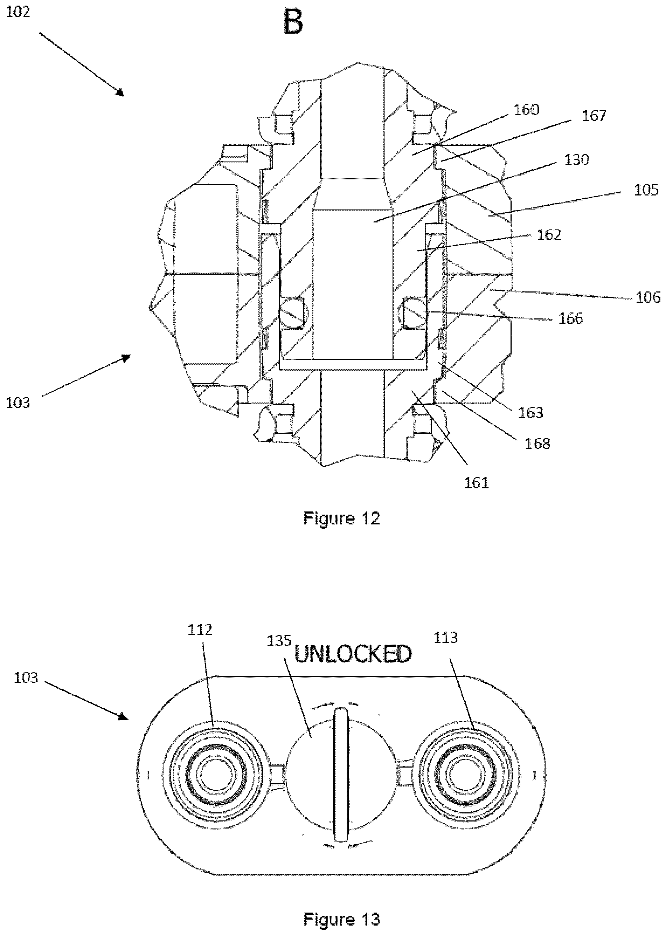

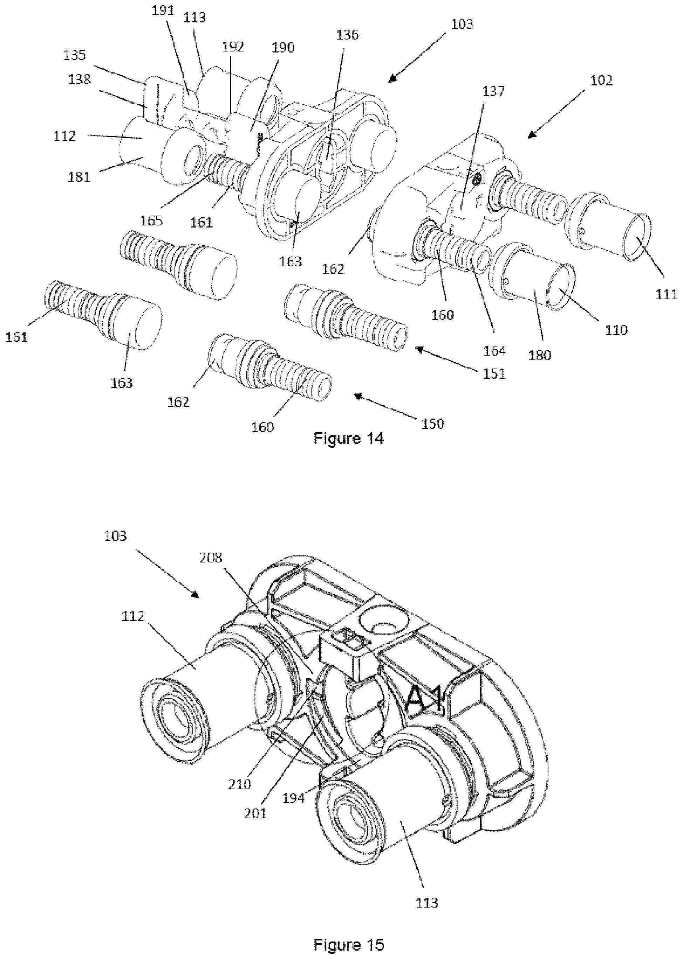

The pipe coupling first part 160 has a tubular protrusion 162 at one end which protrudes towards the female part 103 (see Figures 12 and 14). The pipe coupling second part 161 has a recess 163 at one end for receiving the tubular protrusion 162. The male part 102 is engageable with the female part 103 by the tubular protrusion 162 being slidably received in the recess 163 to form the first passageway 130. Conveniently, as in this embodiment, the tubular protrusion 162 is held in the recess 163 in an interference fit. The tubular protrusion 162 has an O-ring 166 in a groove on its outer surface to seal the space between the tubular protrusion 162 and the recess 163.

Referring to Figure 12, the male part main body 105 has a seat 167 which projects inwards from the wall of the hole in which the pipe coupling first part 160 is located. The seat 167 prevents the pipe coupling first part 160 from moving away from the pipe coupling second part 161 when the male and female parts 102, 103 are engaged. The female part main body 106 has a corresponding seat 168. This prevents the pipe coupling 150 from coming apart and fluid from leaking from the first passageway 130.

Referring again to Figure 11, the pipe coupling first part 160 further has a tubular pipe insert 164 at the opposite end from the tubular protrusion 162, which extends away from the female part 103, in the opposite direction to the tubular protrusion 162. The tubular pipe insert 164 is part of the pipe receiving portion 110 of the male part 102. The tubular pipe insert 164 is configured to be inserted into the end of a pipe for supplying fluid to or removing fluid from the interconnector 101. The tubular pipe insert 164 has two O-rings 170, each in a respective groove, on its outer surface to seal the space between the pipe and the tubular pipe insert 164. The pipe coupling second part 161 has a corresponding tubular pipe insert 165.

The tubular pipe inserts 164, 165 preferably, as in this embodiment, have teeth on their outer surfaces to make it harder for the pipe to slide off.

The pipe receiving portion 110 comprises a tubular sleeve 180 which is configured to receive the end of the pipe. The tubular sleeve 180 is configured to be press-fitted onto the pipe when the pipe is inserted into the sleeve 180 to hold the pipe in place. The pipe receiving portion 112 comprises a corresponding tubular sleeve 181.

In the second embodiment, in contrast to the first embodiment, fluid flowing through the first passageway 130 formed by the pipe coupling 150 does not contact the male part main body 105 or the female part main body 106, and therefore the male and female part main bodies 105, 106 do not need to be formed of a material which is suitable for coming into contact with the fluid. The main function of the main bodies 105, 106 is to hold the pipe coupling first part 160 and pipe coupling second part 161 together to form the first passageway 130 which does not leak, and to hold the pipe couplings 150 and 151 relative to each other.

The second embodiment also differs from the first embodiment in the way the male and female parts 102, 103 are locked together. In particular, in the second embodiment a locking member in the present embodiment in the form of a key 135 extends substantially parallel to the direction in which the male and female parts 102, 103 are engageable when it is received in holes in the male and female parts 102, 103. The key 135 is also insertable into the holes in this direction, as shown in Figure 14. Figure 14 also shows hole 136 in the female part main body 106, and hole 137 in the male part main body 105. Each hole 136, 137 extends substantially parallel to the direction in which the two parts 102, 103 are engageable.

As shown in Figure 14, the key 135 has a head 138 at one end and a tail 190 at the other end. The tail 190 has a bearing surface 192 which is longer than it is wide. The bearing surface 192 has a corresponding shape to that of the holes 136, 137. The tail 190 can be passed through the holes 136, 137 when it is in first orientation (that shown in Figure 14) so that the key 135 can be received in the holes 136, 137. The key 135 will then be in a first (unlocked) position in which it can be removed from the holes 136, 137. The head 138 of the key 135 may be rotated by hand by the user, in a clockwise direction in this embodiment, to a second (locked) position in which the key 135 cannot be removed from the holes 136, 137. In this position, the key 135 locks the male and female parts 102, 103 in engagement. Alternatively, the tail 190 may be rotated by hand to move the key 135 between the two positions.

In the locked position, the bearing surface 192 of the tail 190 bears against the outer surface of the male part 102 to prevent the tail 190 passing through the holes 136, 137. This prevents the key 135 from being removed from the holes 136, 137 and prevents the male and female parts 102, 103 being disengaged. The head 138 also has a bearing surface 191 which bears against the outer surface of the female part 103 to prevent the head 138 passing through the holes 136, 137. The head 138, in contrast to the tail 190, is too large to pass through the holes in any orientation.

To put it another way, the head 138 abuts against the outer surface of the female part 103 in the second (locked) position. The head 138 is receivable on said outer surface of the female part 103 when the key 135 is in the first (unlocked) position and when the parts 102, 103 are engaged.

Referring to Figure 10, the outer surface 194 of the female part 103 has a pair of catches 201,202 which each extend in an arc around the periphery of the head 138 of the key 135. The catches 201,202 restrict movement of the key 135 from the second (locked) position to the first (unlocked) position. In Figure 10 the key 135 has been rotated as far as it can go to reach the second (locked) position. However, it is not necessary to rotate the key 135 as far as this to reach a locked position, and as long as the key 135 in is a position to prevent the male and female parts 102, 103 being disengaged, the interconnector 101 can be considered locked.

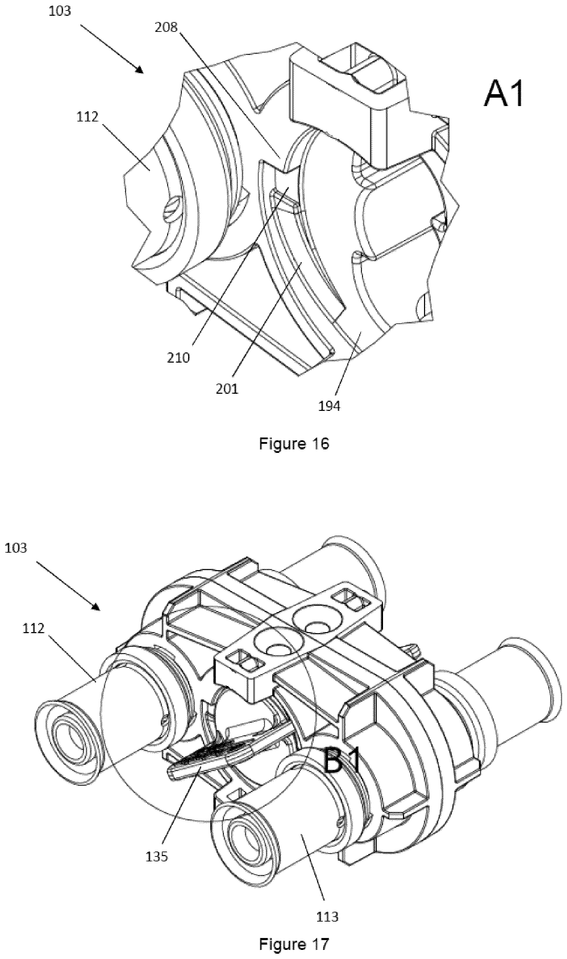

The key 135 has a pair of protrusions 205, 206 which protrude radially outwards from the head 138 of the key 135. Contact between the protrusions 205, 206 and the catches 201, 202 restricts the movement of the key 135. The catch 201 is best seen in Figures 15 and 16.

Referring to Figure 10, the catches 201,202 protrude from the outer surface 194 of the female part 103, and each has an inclined outer surface so that the protrusions 205, 206 are pushed away from the outer surface 194 of the female part 103 as the key 135 moves from the first (unlocked) position to the second (locked) position. As such, as the key 135 moves from the first (unlocked) position to the second (locked) position, the male and female parts 102, 103 are compressed together.

When moving the key 135 in the other direction, that is from the locked to unlocked position, a larger initial force is required to move the key 135 past the catches 201,202 in comparison to the force required to move the key 135 after the key 135 has passed the catches 201, 202.

The outer surface 194 of the female part 103 also has a pair of stops 208, 209 to prevent movement of the key 135 past the locked position (clockwise in Figure 10) after the locking member has moved from the unlocked position to the locked position. The stop 208 is best seen in Figures 15 and 16.

Referring to Figure 10, in addition, the stops 208, 209 also prevent movement of the key 135 in the other direction, past the unlocked position after the locking member has moved from the locked position to the unlocked position. That is, the stops 208, 209 also prevent movement of the key 135 past the position shown in Figure 13 (anticlockwise in Figure 13). Referring again to Figure 10, each stop 208, 209 extends 90° in an arc around the periphery of the head 138 of the key 135.

Since, in this embodiment, the male and female part main bodies 105, 106 are identical, catches and stops corresponding to the catches 201, 202 and stops 208, 209 on the female part main body 106 are also provided on the male part main body 105. However, the tail 190 of the key 135 is too small to contact them.

As best seen in Figure 11, key 135 has two holes 195 through its shank, that is the part of the key 135 that extends between the head 138 and the tail 190 and which is inside the male and female parts 102, 103 when the key 135 is received in holes 136, 137. The head 138 and tail 190 are exposed when the key 135 is in this position. As best seen in Figure 9, the male and female part main bodies 105, 106 each have a hole 196, 197 which extends at a right angle to the direction in which the male and female parts 102, 103 engage. When the key 135 is fully rotated and in the locked position, the holes 195 in the key 135 align with the holes 196, 197 in the male and female part main bodies 105, 106 to provide a path for a screw or security pin (not shown). The screw or security pin prevents the key 135 being moved to the unlocked position. This means that the key 135 cannot be moved to the unlocked position without removing the screw or security pin. Alternatively or additionally, a security tie (not shown) may pass through holes 215 in the head 138 of the key 135, as well as holes 216 of the female part main body 106 which are shown in Figure 9. The holes 216 of the female part main body 106 are provided at both the upper and lower surfaces of the female part main body 106. (Corresponding holes are also provided on the male part main body 105.) Conveniently, the security tie is a tamper-evident security tie so that it can be known if the tie has been removed and replaced again.

The screw may pass from one side of the interconnector 101, along a straight path through the hole 196 in the male part main body 105 and through a hole 195 in the key 135 and into a structural member on the other side of the interconnector 101, to fix the interconnector 101 to the structural member. Alternatively, the screw may pass through the hole 197 in the female part main body 106 and through key 135. In this way, the screw serves a dual purpose of maintaining the key 135 in the second position and fixing the interconnector 101 to the structural member. It would not be possible to fix the interconnector 101 to the structural member if the key 135 were in the first position. This therefore provides an additional safety feature.

Figures 15 and 16 illustrate only the female part 103, with the key 135 not shown. The shape of the catch 201 can be seen with its inclined outer surface. Also shown is stop 208 to prevent movement of the key 135 past the locked position. It can be seen that, when the key is in the locked position, between the catch 201 and stop 208, the key sits on a raised surface 210 which is raised in comparison to the position on the outer surface 194 where the key 135 sits in the unlocked position.

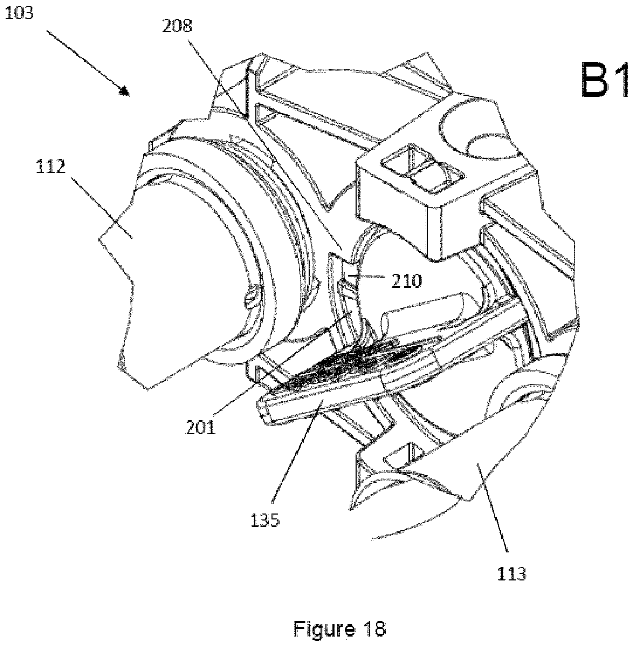

Figure 17 shows both male and female parts 102, 103 with the key 135 shown in a position between the fully rotated locked position and the unlocked position. Figure 18 shows detail B1 shown in Figure 17. In the position shown, the key 135 is on the inclined surface of catch 201 and is compressing the male part 102 and the female part 103 together. If the key 135 is rotated further into the locked position, the key will sit on raised surface 210 and continue compressing the male part 102 and the female part 103 together. The distance between the bearing surfaces 191, 192 of the key 135 is set to be the same as or very close to the distance between the outer surface 194 of female part 103 and the outer surface of male part 102. This means that when the key 135 travels up the inclined surface of the catch 201, the male and female parts 102, 103 are compressed together by the key 135.

In this embodiment, the main bodies 105, 106 of the male and female parts 102, 103 are made of polybutylene, but could be made instead of other plastic, or metal, for example, brass. The tubular sleeves 180, 181 are made of brass in this embodiment.

Embodiments of the present invention has been described purely by way of example, and various modifications, additions and/or omissions will present themselves to one skilled in the art, all of which form part of the invention.

## Claims

1. A pipe interconnector comprising a first part and a second part, the two parts being engageable with and disengageable from each other, the two parts each having at least two pipe receiving portions,
wherein the first part is engageable with the second part so as to provide a first passageway for fluid from a pipe receiving portion of the first part to a pipe receiving portion of the second part, and a second passageway for fluid from another pipe receiving portion of the first part to another pipe receiving portion of the second part.

2. A pipe interconnector according to claim 1, wherein the first part comprises a tubular protrusion having an open end, and the second part comprises a recess for receiving the tubular protrusion, and the first part is engageable with the second part by the tubular protrusion being received in the recess to form the first passageway; optionally, wherein the tubular protrusion is slidably received in the recess, and/or wherein the first part comprises a first part main body, and the second part comprises a second part main body, and the tubular protrusion of the first part is formed with one of the pipe receiving portions as one piece which is separate from the first part main body, and the recess of the second part is formed with another of the pipe receiving portions as one piece which is separate from the second part main body.

3. A pipe interconnector according to claims 1 or 2, wherein the first part comprises a protrusion, and the second part comprises a recess for receiving the protrusion when the first part engages with the second part, the protrusion and recess being configured to allow the first part to engage with the second part so as to provide the first passageway for fluid from the pipe receiving portion of the first part to the pipe receiving portion of the second part, but to prevent the first part engaging with the second part so as to provide a passageway for fluid from the pipe receiving portion of the first part to the other pipe receiving portion of the second part.

4. A pipe interconnector according to claim 3, wherein the protrusion is a guiding protrusion, and the recess is a channel, and, wherein the guiding protrusion has a shape with no rotational symmetry when viewed along the direction in which the first and second parts are engageable, and the channel has a corresponding shape in cross-section.

5. A pipe interconnector according to claim 3 or 4, wherein the protrusion is a guiding protrusion, and the recess is a channel, and wherein the channel has an open end so the guiding protrusion can be pushed out of the channel by the user.

6. A pipe interconnector according to any preceding claim, wherein a locking mechanism is provided to lock the first and second parts together in engagement, wherein the locking mechanism is provided by a locking member received in a hole in the first part and a hole in the second part, the holes being aligned when the first and second parts are engaged; optionally, wherein the holes extend at an angle to the direction in which the first and second parts are engageable.

7. A pipe interconnector according to claim 6 when dependent on claims 4 or 5, wherein the hole in the first part is formed in the guiding protrusion.

8. A pipe interconnector according to claims 6 or 7, wherein the locking member while received in the holes is movable between a first position in which it can be removed from the holes, and a second position in which it cannot be removed from the holes.

9. A pipe interconnector according to claim 8, wherein the locking member comprises a head arranged to abut against a surface of one of the first and second parts adjacent the respective hole in the second position, the head receivable on said surface in the first position when the parts are engaged; optionally, wherein said surface has an inclined surface or ramp up which the locking member travels when it moves from the first position to the second position, such that the first and second parts are compressed together.

10. A pipe interconnector according to claims 8 or 9, wherein the holes extend substantially parallel to the direction in which the first and second parts are engageable, wherein the locking member has two bearing surfaces which, when the locking member is in the second position, bear against respective surfaces of the first and second parts facing in opposite directions, to prevent the first and second parts being disengaged; optionally, wherein the surfaces of the first and second parts are outer surfaces which are outer in the direction in which the first and second parts are engageable.

11. A pipe interconnector according to any one of claims 8 to 10, wherein, when the locking member is in the second position in which it cannot be removed from the holes, a path for a security pin or security tie, to prevent the locking member being moved to the first position, is formed through the locking member and the first and/or second part.

12. A pipe interconnector according to any of claims 6 to 11, wherein the locking member is a key or locking pin, and where the key or locking pin has a handle.

13. A pipe interconnector according to claim 12, wherein the handle has an underside that can be pushed by the user when the locking pin is fully received in the holes to remove the pin from the holes.

14. A pipe interconnector according to claim 13, wherein the locking pin can be rotated in the holes to a position in which the underside of the handle can no longer be pushed by the user; optionally, wherein the locking pin can be rotated in the holes so that the handle is received in a slot in the first or second part so that the underside of the handle can no longer be pushed by the user.

15. A pipe interconnector according to any preceding claim, wherein the first and second parts are made at least in part from at least one selected from the group of brass, plastics, polybutylene, acetyl, glass-filled nylon, and sulphone.
